(19) Europäisches Patentamt
European Patent Office
Office européen des brevets

(11) Numéro de publication: **0 147 323**
**B1**

(12) # FASCICULE DE BREVET EUROPÉEN

(45) Date de publication du fascicule du brevet: **04.11.87**

(51) Int. Cl.⁴: **C 08 L 83/04**, C 08 K 5/57

(21) Numéro de dépôt: **84402697.1**

(22) Date de dépôt: **21.12.84**

(54) **Composition polyorganosiloxanique durcissant en élastomère etcomportant un catalyseur à l'étain chelate.**

(30) Priorité: **28.12.83 FR 8320913**

(43) Date de publication de la demande: **03.07.85 Bulletin 85/27**

(45) Mention de la délivrance du brevet: **04.11.87 Bulletin 87/45**

(84) Etats contractants désignés: **AT BE CH DE FR GB IT LI LU NL SE**

(56) Documents cité:
**FR-A-2 251 602**

**CHEMICAL ABSTRACTS, vol. 98, no. 8, 21 février 1983, page 34, réf. no. 54984r, Columbus, Ohio, US; N.I. LYUTKIN et al.: "Kinetics of the curing of methyl phenyl siloxanes using chelates"**
**CHEMICAL ABSTRACTS, vol. 77, no. 18, 30 octobre 1972, page 84 réf. no. 115995k, Columbus, Ohio, US**

(73) Titulaire: **RHONE- POULENC CHIMIE, 25, quai Paul Doumer, F-92408 Courbevoie Cédex (FR)**

(72) Inventeur: **Letoffe, Michel, 5, avenue de Limburg, F-69110 Sainte- Foy Les Lyon (FR)**

(74) Mandataire: **Seugnet, Jean Louis, RHONE-POULENC INTERSERVICES Service Brevets Chimie Centre de Recherches de Saint- Fons B.P. 62, F-69192 Saint- Fons Cédex (FR)**

**EP 0 147 323 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention concerne une composition polyorganosiloxanique durcissant en élastomère et comportant un catalyseur à l'étain chélaté.

De nombreux composés de l'étain ont déjà été proposés comme catalyseur de réticulation de compositions polyorganosiloxaniques et en particulier de compositions RTV (composrtions vulcanisables à température ambiante) à un seul ou à deux emballages autrement dit mono ou bicomposantes.

Les composés les plus utilisés sont les carboxylates d'étain tels que le monooléate de tributyltain, l'éthyl -2 hexanoate d'étain les dicarboxylates de dialkylétain tels que la dilaurate de dibutylétain et la diacétate de dibutylétain (voir l'ouvrage de Noll "Chemistry and technology of silicones" page 337, Académic Press, 1968 - 2ème édition).

Selon US-A-3 186 963, on propose comme catalyseur à l'étain la produit de la réaction d'un sel d'étain, en particuliar dilaurate de dibutylétain, sur du polysilicate d'éthyle.

Selon la brevet US-A-3 862 919, on propose comme catalyseur à l'étain le produit de la réaction d'un dialkyldialcoxysilane sur un carboxylate d'étain.

Selon BE-A-842 305, on propose comme catalyseur le produit de la réaction d'un silicate d'alkyle ou d'un alkyltrialcoxysilane sur le diacètate de dibutylétain.

Selon FR-A-2 251 602, on décrit en détail l'utilisation de chélates de titane comme catalyseur de polymérisation de compositions organopolysiloxaniques durcissables en élastomère. A la page 10, ligne 18 à 21 de ce brevet on indique bien en passant que le titane peut être remplacé par un autre métal choisi parmi 18 métaux dont l'étain, mais sans fournir aucune autre indication sur ces 18 métaux dans la reste de la description at dans les exemples et sans préciser notamment ls valence et le degré de coordination de cas métaux.

La référence du Chemical Abstracts, vol. 98 n° 8, 21 février 1983 page 34, numéro 549 84r résume une publication russe décrivant l'utilisation de chélate d'étain de valance II- tétracoordonné pour la réticulation de polyméthylphényl-siloxane en vue de fabriquer des résines et non pas des élastomères silicones.

Les catalyseurs à l'étain de l'art antérieur sont certes efficaces mais ils présentent certains inconvéniants. Ainsi ce sont des produits souvent toxiques ou, dans la cas des stannosiloxanes, des produits couteux et difficiles à préparer. Par ailleurs ces produits sont parfois très actifs et ne sont donc pas utilisables ou très difficilement utilisables dans des compositions polyorganosiloxaniques monocomposantes. Les élastomères durcis présentent très souvent en outre une mauvaise tenue à la reversion.

Il existe donc un besoin de disposer d'un catalyseur à l'étain parfaitement soluble dans les polysiloxanes, peu toxique, peu couteux et facile à préparer qui soit utilisable à la fois dans des compositions polyorganosiloxaniques, durcissables en élastomères présentant une bonne tenue à la réversion, mono ou bicomposantas, c'est-à-dire un catalyseur qui soit peu actif à l'abri de l'humidité de l'air ou à température ambiante mais qui soit actif en présence d'humidité, ou par simple mélange des deux composantes.

La présente invention a pour but de proposer un tel catalyseur. Ce but est atteint conformément à la présente invention qui concerne en effet une composition polyorganosiloxanique durcissable en élastomère, caractérisée en ce qu'elle comporte des polydiorganosiloxanes portant en bout de chaîne des groupes condensables ou hydrolysables, et éventuellement des composés de silicium dont chaque molécule porte au moins 3 groupes condensables ou hydrolysables et une quantité catalytiquement efficace d'un chélate d'étain de valence IV, de préférence d'un chélate d'êtain de valence IV hexacoordiné.

Parmi ces chélates, on préfère plus particulièrement las chélates qui sont sans forme liquide à température et pression normales car ils sont parfaitement solubles dans les silicones.

Plus particulièrement et de préférence ce chélate répond à la formule (I):

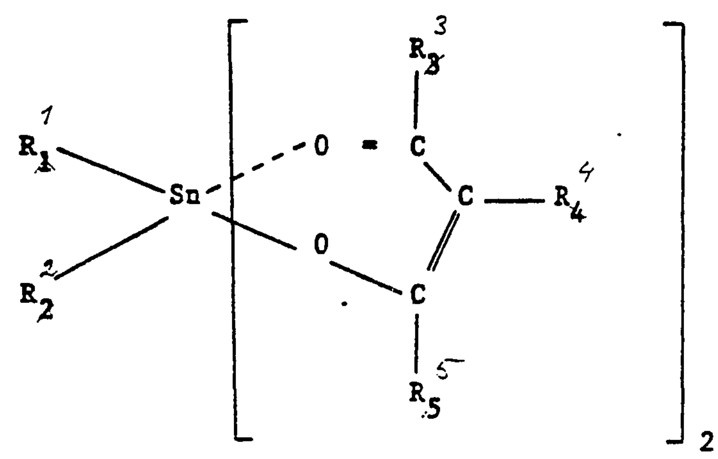

(I)

dans laquelle:

Les radicaux $R^1$ et $R^2$ identiques ou différents représentent un radical alkyle en $C_1$ - $C_{12}$, un radical alcoxy en $C_1$ - $C_{12}$, un radical alcènyle en $C_2$- $C_{12}$, un radical acyle en $C_1$ - $C_{12}$, un radical acyloxy en $C_1$ - $C_6$, un radical

cycloalkyle éventuellement halogéné en $C_5$ - $C_8$, un radical aryle mononucléaire éventuellament est en $C_1$-$C_4$ un radical arylalkyle mononucléaire dont la partie alkyle est en $C_1$ - $C_4$, $R^1$ et $R^2$ étant différents de l'atome d'hydrogène.

$R^3$ et $R^5$ identiques ou différents sont choisis parmi l'atome d'hydrogène, un radical ne contenant pas plus de 8 atomas de carbone environ choisi parmi les radicaux alkyle, halogénoalkyle, cyanoalkyle, alcoxy, halogénoalcoxy, cyanoalcoxy, aryle mononucléaire éventuellament halogéné et arylalkyle mononucléaire éventuellement halogéné dont la partie alkyle est en $C_1$ - $C_4$.

$R^4$ est choisi parmi l'atome d'hydrogène, un radical ne contenant pas plus de 8 atomes de carbone environ choisi parmi un radical alkyle, halogénoalkyle et aryle ou bien $R^4$ conjointement avec $R^5$, forme un radical hydrocarboné cyclique ne contenant pas plus de 12 atomes de carbone et éventuellement substitué pas des radicaux chloro, nitro et cyano.

Les chélates d'étain selon l'invention sont des produits connus dont la préparation est décrite par exemple dans US-A-3 055 845 qui est cité comme référence dans la présente description.

On peut ainsi préparer les catalyseurs selon l'invention, en effectuant une transastérification, avec un formateur de chélate approprié, avec dégagement de méthanol, ou d'éthanol, d'un produit de formule ($A_1$) ou ($A_2$).

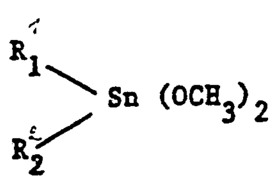

($A_1$)

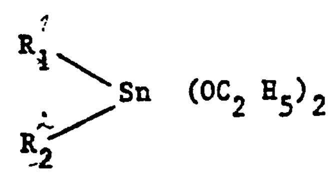

($A_2$)

dans laquelle $R^1$ et $R^2$ ont la même signification que ci-dessus.

Les produits de formule ($A_1$) et leur préparation sont décrits dans US-A-2 727 917.

Un procédé de préparation des produits de formule (I) à partir des produits de formule ($A_2$) est décrit dans J. Organometal. Chem., 4 (1965) pages 237-240 cité comme référence.

Un autre procédé consiste à faire réagir un produit de formule (B)

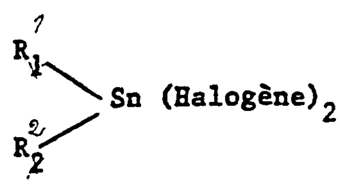

(B)

dans laquelle $R^1$ et $R^2$ ont la même signification que ci-dessus, avec le formateur de chélate approprié et élimination de l'halogénure d'hydrogène formé.

Un autre procédé consiste à faire réagir un oxyde d'étain de formule (C):

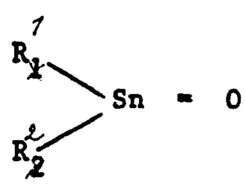

(C)

dans laquelle $R^1$ et $R^2$ ont la même signification que ci-dessus avec le formateur de chélate approprié et élimination de l'eau formée.

Un procédé de fabrication des produits de formule (1) à partir des produits de formule (C) est décrit dans Journal of the American Chemical Society 87:9, 5 mai 1965, pages 1909-1916 cité comme référence.

Comme radicaux $R^1$, $R^2$ alkyle, on peut citer les radicaux méthyle, éthyle, n-propyle, isopropyle, n-butyle, isobutyle, butyle secondaire, butyle tertraire, amyle, hexyle, heptyle et octyle; comme radicaux alcényles les radicaux vinyle, allyle, n-butenyle-1, n-pentenyle-2, comme radicaux alcoxy, les radicaux méthoxy et éthoxy, comme radicaux acyloxy les radicaux formyloxy, acétoxy, propionyloxy comme radical cycloalkyle éventuellement halogéné, les radicaux cyclopentyle, cyclohexyle, cyclohéptyle, cyclooctyle, 3,4-dichlorocyclohexyle et 2,6-dibromocyclohéptyle, comme radical aryle mononucléaire éventuellement halogéné, les radicaux arylalkyle ou alkylaryle, les radicaux phényle, benzyle, tolyle, xylyle, 2,6-dichlorophényle, 4-bromophényle, 2,5 difluorophényle, 2,5-dibromophényle et 2,4,6-trichlorophényle.

Les radicaux $R^3$ et $R^5$ alkyle, alcoxy, aryle et arylalkyle peuvent être les mêmes que $R_1$ et $R_2$. Comme radicaux $R^3$, $R^5$ halogénoalkyle on peut citer les radicaux chlorométhyle, trichlorométhyle, iodométhyle, fluorométhyle, trifluorométhyle, chloroéthyle, chloro-n-propyle, bromo-n-propyle, 2,4-dichlorooctyle, comme radicaux

cyanoalkyle, les radicaux cyanométhyle, bétacyanoéthyle et gammacyanopropyle, comme radicaux cyanoalcoxy les radicaux cyanométhoxy, bétacyanoéthoxy et gammacyanopropoxy, comme radicaux halogénoalcoxy, les radicaux chlorométhoxy, iodoéthoxy, trichlorométhoxy, dichloroéthoxy et 2,3-dichloropentoxy.

Les radicaux $R^4$ alkyle et halogénoalkyle peuvent être les mêmes que les radicaux $R^3$ et $R^5$ comme radical $R^4$ acyle on peut citer les radicaux formyle, acétyle et propanoyle.

Comme exemples de chélates d'étain de valence IV hexacoordiné on peut citer les produits suivants:

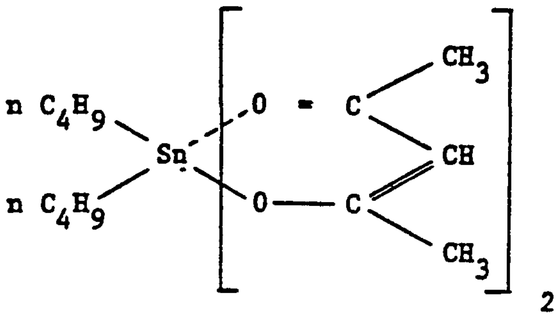

(1)

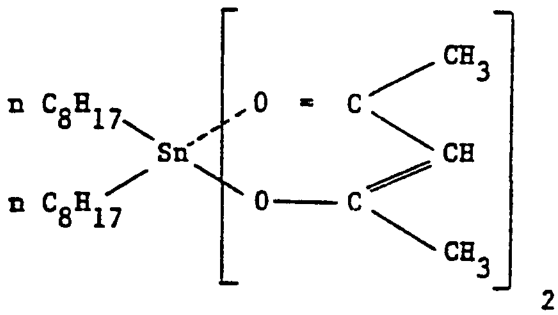

(2)

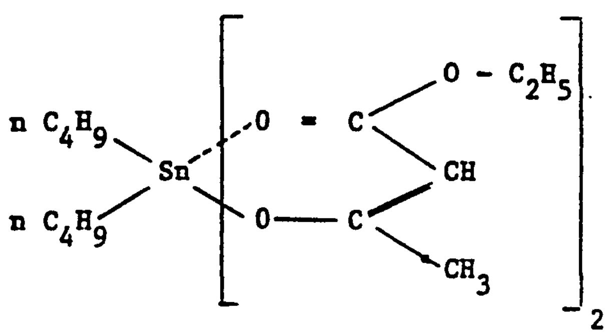

(3)

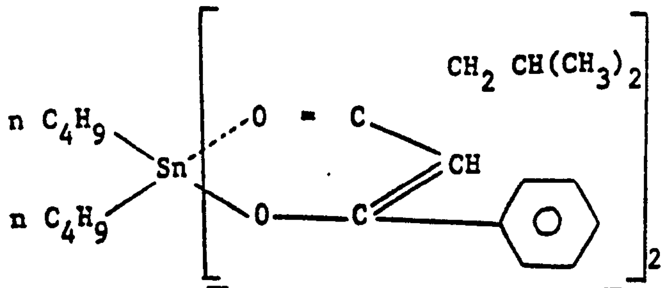

(4)

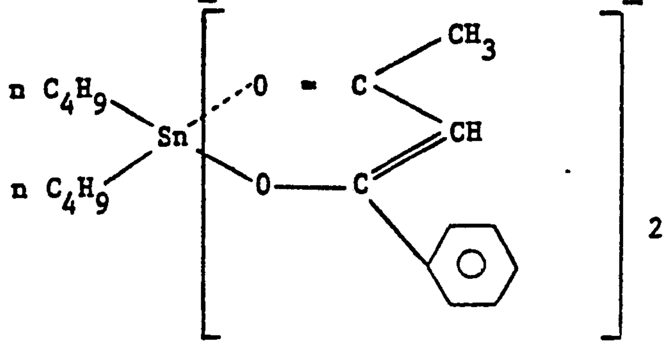

(5)

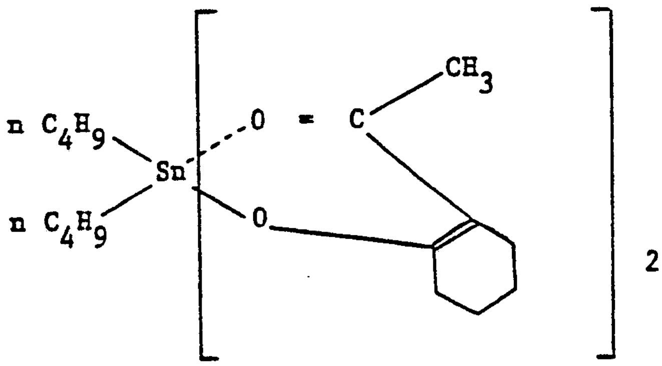

(6)

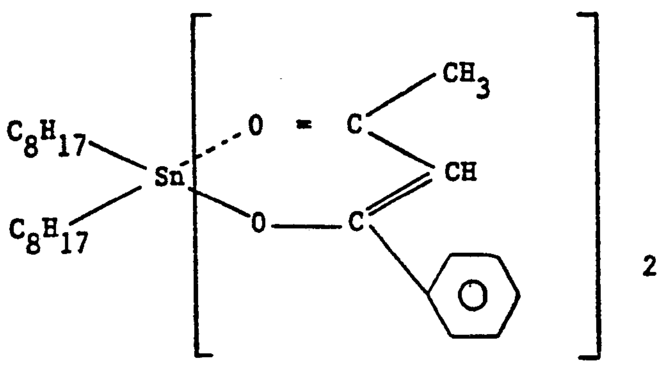

(7)

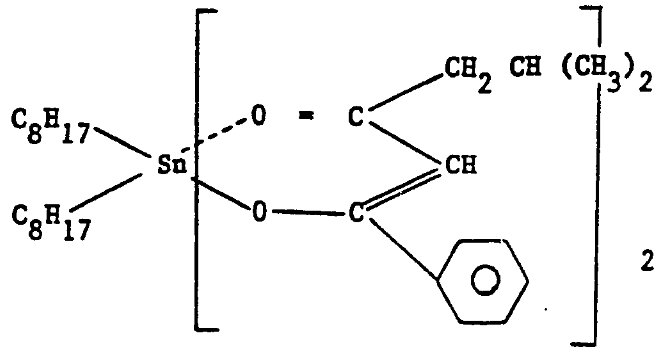

(8)

Les produits de formule (1) à (9) ci-dessus sont tous liquides et parfaitement solublas dans les compositions polysiloxaniques.

Les polydiorganosiloxanes utilisables dans les compositions selon l'invention sont plus particulrèrement ceux répondant à la formule (II):

$\cdot Y_n\ Si\ R_{3-n}\ O(Si\ R_2O)_x\ Si\ R_{3-n}\ \cdot Y_n$ (II)

dans laquelle:

R représente des radicaux hydrocarbonés monovalents identiques ou différents, qui peuvent être polymères et/ou porteurs de substitutions, Y représante des groupes hydrolysables ou condensables identiques ou différents, ou des groupes hydroxy,

n est choisi parmi 1, 2 et 3, et x est un nombre entier supérieur à 1.

La viscosité des polymères de formule (II) est comprise entre 50 et $10^6$ m Pa.s. à 25°C. Comme exemple de radicaux R on peut citer les radicaux alkyle ayant de 1 à 8 atomes de carbone tels que méthyle, éthyle, propyle, butyle, héxyle et octyle, les radicaux alcènyles ayant de 1 à 4 atomes de carbone tels que vinyle, allyle, éthylallyle et butadiènyle, des radicaux aryles mononucléaires tels que les radicaux phényle, benzyle et tolyle. Comme exemples de radicaux R substitués on peut citer les radicaux trifluoro -3,3,3 propyle, chlorophényle et bétacyanoéthyle.

Comme exemple de radicaux R polymères évantuellement substitués, on peut citer des polymères ou copolymères liés au silicium par une liaison Si-C, dérivant d'au moins un monomère polymérisable par la présence d'une insaturation éthylénique comme le styrène, l'acètate de vinyle, l'acrylate de n-butyle, le méthacrylate de n-butyle et l'acrylonitrile.

Dans les produits de formule (II) généralement utilisés industriellement, au moins 60 % des radicaux R sont des radicaux méthyle, les autres radicaux étant généralement des radicaux phényle et/ou vinyle.

Comme exemple de groupes Y hydrolysables on peut citer les groupes amino, acylamino, aminoxy, cétiminoxy, iminoxy, alcoxy, alcoxy-alkylène-oxy, acyloxy et phosphato.

Comme exemple de groupes Y amino, on peut citer les groupes n-butylamino, sec-butylamino et cyclobexylamino, de groupes acylamino, on peut citer le groupe benzoyl-amino, de groupes aminoxy les groupes diméthylaminoxy, diéthylaminoxy, dioctylaminoxy et diphenylaminoxy, comme groupes Y iminoxy et cétiminoxy, l'acétophénone-oxime, l'acétone-oxime, la benzophènone-oxime, la méthyl-éthyl cétoxime, la diisopropylcétoxime et la chlorocyclo-hexanone-oxime.

Comme groupes Y alcoxy on peut citer les groupes ayant de 1 à 8 atomes de carbone commes les groupes méthoxy, éthoxy, propoxy, isopropoxy, butoxy, hexyloxy et octyloxy, comma groupe Y alcoxy-alkylène-oxy on peut citer le groupe méthoxy-éthylène-oxy.

Comme groupes Y acyloxy, on peut citer les groupes ayant de 1 à 8 atomes de carbone comme les groupes formyloxy, acétoxy et propronyloxy.

Comme groupes Y phospato on peut citer les groupes phosphate de diméthyle, phosphate da diéthyle et phosphate de dibutyle.

Comme groupes Y condensables on peut citer les atomes d'hydrogène et les atomes d'halogène de préférence le chlore.

Quand dans la formule (II) ci-dessus les groupes Y sont des groupes hydroxy, n est alors égal à 1, il est nécessaire, pour préparer des élastomères polyorganosiloxaniques à partir des polymères de formule (II) ci-dessus ayant dans leurs motifs terminaux des groupes condensables ou hydrolysables, d'utiliser, en plus des catalyseurs de condensation, des agents réticulants de formule générale (III):

$R_{4-a}\ Si\ Y'_a$ (III)

dans laquelle R a les significations données plus haut pour la formule (II) et Y' représente des groupes hydrolysables ou condensables identiques ou différents,

a est égal à 3 ou 4.

Les exemples donnés pour les groupes y sont appliquables aux groupes Y'.

Les polydiorganosiloxanes alpha-oméga dihydroxylés de formule (II) sont généralement des huiles dont la viscosité varie de 500 mPa.s. à 25° C à 500 000 mPa.s. à 25° C, de préférence 800 mPa.s. à 400 000 à 25° C, ce sont des polymères linéaires constitués essentiellement de motifs diorganosiloxyles de formule ($R_2SiO$). Toutefois la présence d'autres motifs, présents généralement à titre d'impuretés, tels que R $SiO_{3/2}$, R $SiO_{1/2}$ et $SiO_{4/2}$ n'est pas exclue dans la proportion d'au plus 1 % par rapport au nombre de motifs diorganosiloxyles.

Les radicaux organiques, liés aux atomes de silicium des huiles de base, représentés par la symbole R, peuvent être choisis parmi les radicaux alkyles ayant de 1 à 3 atomes de carbone tels que les radicaux méthyle, éthyle, n-propyle, le radical vinyle, le radical phényle, le radical trifluoro-3,3,3 propyle, la radical bétacyanoéthyle.

Au moins 60 % de l'ensamble des radicaux R sont des radicaux méthyle, au plus 1 % sont des radicaux vinyle.

A titre illustratif de motifs représentés par la formule $R_2SiO$ peuvent être cités ceux de formules: $(CH_3)_2SiO$; $CH_3(CH_2{=}CH)SiO$; $CH_3$ $(C_6H_5)SiO$; $(C_6H_5)_2SiO$; $CF_3CH_2CH_2(CH_3)SiO$; NC-$CH_2CH_2(CH_3)SiO$; NC-$CH_2CH_2(C_6H_5)SiO$.

Ces huiles de base sont, dans leur grande majorité, commercialisées par les fabricants de silicones. D'autre part leurs techniques de fabrication sont bien connues, on les trouve décrites par exemple dans FR-A-1 134 005, 1 198 749, 1 226 745.

Comme exemple de silanes monomères de formule (III) on peut citer plus particulièrement les polyacyloxysilanes, les polyalcoxysilanes, les polycétiminoxysilanes et les polyiminoxysilanes et en particulier les silanes suivants:

$CH_3Si\ (OCO\ CH_3)_3$; $C_2H_5Si\ (OCO\ CH_3)_3$; $CH_2 = CH\ Si\ (OCO\ CH_3)_3$;
$C_6\ H_5\ Si\ (OCO\ CH_3)_3$; $CF_3\ CH_2\ CH_2\ Si\ (OCO\ CH_3)_3$;
NC - $CH_2CH_2\ Si\ (OCO\ CH_3)_3$; $CH_2\ Cl\ Si\ (OCO\ CH_2\ CH_3)_3$;
$CH_3\ Si\ (ON = C\ (CH_3)\ C_2\ H_5)_3$; $CH_3\ Si\ (ON = CH\text{-}CH_3)_3$;
$CH_3\ Si\ (ON = C\ (CH_3)\ C_2\ H_5)_2\ OCH_2\ CH_2\ OCH_3$;
$CH_3\ Si\ (ON = CH - CH_3)_2\ OCH_2\ CH_2\ OCH_3$.

Les silanes ci-dessus associés à des polydiorganosiloxanes alpha-oméga dihydroxylés de formule (II) peuvent être utilisés en compositions monocomposantes stables à l'abri de l'air.

Comme exemples de silane monomère de formule (III) qui, associés à des polydiorganosiloxanes alpha-oméga dihydroxylés de formule (II), peuvent être utilisés avantageusement en compositions bi-composantes, on peut citer les polyalcoxysilanes et en particulier ceux de formule:

$Si(OC_2H_5)_4$; $Si(O\text{-}n\text{-}C_3H_7)_4$; $Si(O\text{-}isoC_3H_7)_4$;
$Si(OC_2H_4OCH_3)_3$; $CH_3Si(OCH_3)_3$; $CH_2 = CHSi(OCH_3)_3$;
$CH_3Si(OC_2H_4OCH_3)_3$; $CH_2ClSi(OC_2H_5)_3$;
$CH_2 = CHSi(OC_2H_4OCH_3)_3$.

A tout ou partie des silanes monomères ci-dessus on peut substituer des polyalcoxypolysiloxanes dont chaque molécule compte au moins deux, de préférence trois groupes Y', les autres valences du silicium sont satisfaites par des liaisons siloxaniques SiO- et SiR. Comme exemples d'agents réticulants polymères en peut citer le polysilicate d'éthyle.

Les compositions bi-composantes ci-dessus comportant un catalyseur selon l'invention ont des propriétés particulièrement avantageuses notamment en ce qui concerne le temps de prise et la tenue à la réversion.

On utilise généralement de 0,1 à 20 parties en poids d'agent réticulant de formule (III) pour 100 parties en poids de polymère de formule (II).

Les compositions polyorganosiloxaniques durcissables en élastomère du type décrit ci-dessus comportent de 0,001 à 10 parties en poids de préférence de 0,05 à 3 parties en poids, de chélate d'étain de valence IV de préférence hexacoordiné pour 100 parties en poids de polysiloxane de formule (II).

La teneur en catalyser à l'étain des compositions monocomposantes est généralement beaucoup plus faible que celle utilisée dans les compositons bi-composantes et est généralement comprise entre 0,001 et 0,05 parties en poids pour 100 parties en poids de polysiloxane de formule (II).

Les agnents réticulants de formule (III), qu'ils soient utilisables pour la préparation des copositions mono-composontes ou bi-composantes, sont des produits accessibles sur le marché des silicones de plus leur emploi dans les compositions durcissant dès la température ambiante est connu, il figure notamment dans FR-A- 1 126 411, 1 179 969, 1 189 216, 1 198 749, 1 248 826, 1 314 649, 1 423 477, 1 432 799 et 2 067 636.

Les compositions polydiorganosiloxanes durcissables en élastomère peuvent contenir en outre des produits couramment utilisés pour améliorer ou modifier, dans le sens recherché, les propriétés notamment mécaniques des élastomères. On peut citer, comme exemples de tels produits, des charges renforçantes et semi-renforçantes et non renforçantes telles que les silices de combustion, les silices de précipitation, les oxydes de titane et d'aluminium de combustion, les noirs de carbone, du quartz broyé, des silices de diatomées, le carbonate de calcium, l'argile calcinée, l'oxyde de titane du type rutile, les oxydes de fer, de zinc, de magnésium et d'aluminium. On peut également citer des pigments, des colorants, des inhibiteurs de corrosion, des promoteurs d'adhérance, des plastifiants et des solvants.

Les compositions selon l'invention sont utilisables par simple mélange de leurs constituants, éventuellement on peut introduire ultérieurement de l'eau. Ces compositions sont utilisables par exemple pour la coulée d'éléments électriques et électroniques ou de moteurs, pour la fabrication de pièces moulées, pour la prise d'empreintes en particulier dentaires, pour des revêtaments, pour des isolations et pour toutes les autres applications pour lesquelles on utilise ce type de compositions durcissables en élastomères.

D'autres avantages et caractéristiques de la présente invention apparaîtront à la lecture des exemples suivants donnés à titre illustratif nullement limitatif. Sauf indications contraires, dans ce qui suit les parties et pourcentages sont en poids.

**Exemple 1**

Synthèse du bis (acétylacétonate) de dibutylétain (formule (1) ci-dessus).

On fait réagir 41 g (0,16 mole) d'oxyde de dibutylétain répondant à la formule (C) ci-dessus sur 130 ml (1,27 mole) d'acétylacétone dans un ballon tricol par chauffage au reflux pendant 7 heures, la température du ballon étant maintenue à 110°C. On place ensuite le ballon sous léger vide 2 à 2,67 kPa (15 - 20 mm Hg) pour éliminer l'excès d'acétylacétone. Le produit de formule (1) se présante alors dans la ballon sous la forme d'un liquide jaune pâle. Les spectres infra rouge et RMN confirment la structure théorique de la molécule.

**Exemple 2**

Synthèse du bis (éthylacétoacétate) de dibutylétain (formula (3) ci-dessus).

On coule à température ambiante 27,3 g, soit 0,21 mole, d'acétylacétate d'éthyle sur 29,4 g, soit 0,1 mole, de dibutyldiméthoxyétain répondant à la formule ($A_1$) ci-dessus. On agite le mélange réactionnel pendant 30 min sous un vide d'environ 2 à 2,67 kPa (15 à 20 mm de Hg) tout en portant la température jusqu'à 70°C. On obtient le produit de formule (3) sous la forme d'un liquide jaune pâle légèrement visqueux. Les spectres infra rouge et RMN confirment la structure théorique de la molécule.

En reprenant le mode opératoire de l'exemple 1 ou 2 mais en choisissant les produits de départ on peut synthétiser sans difficulté les produits de formule (2) et (4) à (9) indiqués ci-dessus. Les spectres infra rouge et RMN confirment la structure théorique des différentes molécules.

**Exemple 3**

On prépare une composition polysiloxanique A par mélange de:

300 parties d'huile alpha-oméga-dihydroxypolydiméthylsiloxanique de viscosité 60 000 mPa.s. à 25°C.

300 parties d'huile diméthysiloxanique bloquée à chaque extrémité par un motif triméthylsilyle de viscosité 20 mPa.s. à 25°C.

390 parties de quartz broyé de granulométrie comprise entre 0,5 et 10 μm (microns) et 400 ppm d'eau.

A 100 g de composition A on ajoute 0,8 g de polysilicate d'éthyle comme agent réticulant et 0,0165, 0,025, ou 0,0377 g d'étain métal introduit sous forme de bis (acétylacétonate) de dibutylétain.

On coule les compositions obtenues dans une capsule cylindrique de un centimètre de hauteur et dont le diamètre d'une section droite est de un centimètre et on mesure le temps de prise des deux éprouvettes, ainsi que la dureté Shore A (norme ASTMD 2240) initiale à température ambiante et au bout de plusieurs jours en maintenant l'éprouvette à 120°C pour apprécier la renue à la réversion. Cette dureté est mesurée en surface et sur le fond de l'éprouvette.

Les résultats obtenus sont rassemblés dans le tableau I ci-après.

**Exemples comparatifs 4 et 5**

On procède de la même façon que dans l'exemple 3 sauf que l'on remplace le catalyseur de l'invention par un catalyseur connu à savoir pour l'exemple 4 par du dilaurate de dibutylétain et pour l'exemple 5 par un stannosiloxane de formule:

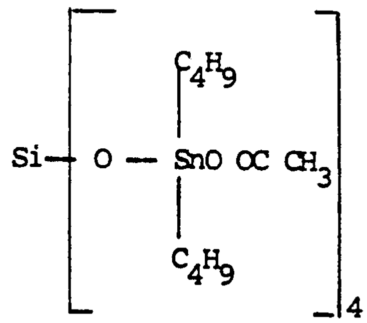

décrit dans BR-A-842 305.

Les résultats obtenus sont rassemblés dans le tableau I ci-après.

De ce tableau il apparaît que, pour des quantités d'étain métal comparables, le catalyseur selon l'invention présente un temps de prise plus rapide et une bien meilleure tenue à la réversion.

## Tableau I

| Catalyseur à l'étain | Sn métal en g pour 100g de A | temps de prise | Dureté Shore A initiale | | 5 jours à 120°C | 10 jours à 120°C | 20 jours à 120°C | 40 jours à 120°C | 80 jours à 120°C |
|---|---|---|---|---|---|---|---|---|---|
| Acétylacétonate de dibutylétain | 0,0377 | 25 mn | Surface | 18 | 17 | 17 | 15 | 16 | 5 |
| | | | Fond | 18 | 18 | 18 | 15 | 15 | 5 |
| " | 0,025 | 25 mn | Surface | 14 | 15 | 15 | 14 | | |
| | | | Fond | 15 | 15 | 15 | 15 | | |
| " | 0,0165 | 2 h 20 mn | Surface | 15 | 16 | 16 | 16 | 16 | 16 |
| | | | Fond | 17 | 17 | 16 | 17 | 17 | 17 |
| dilaurate de dibutylétain | 0,0377 | 2 h 25 mn | Surface | 18 | 9 | 6 | 2 | 0 | 0 |
| | | | Fond | 18 | 9 | 6 | 2 | 0 | 0 |
| " | 0,025 | 3 h | Surface | 17 | 11 | 6 | 3 | | |
| | | | Fond | 16 | 10 | 7 | 3 | | |
| $Si(O-Sn(Bu)_2OOC\ CH_3)_4$ | 0,0207 | 2 h 40 mn | Surface | 16 | 16 | 15 | 13 | 8 | 5 |
| | | | Fond | 16 | 15 | 15 | 12 | 7 | 3 |
| bis(diméthyl-2,2 octoate) de dibutylétain | 0,025 | 7 h | Surface | 16 | 14 | 10 | 4 | | |
| | | | Fond | 15 | 14 | 13 | 4 | | |

**Exemple 6 à 11**

On procède de la même façon que dans l'exemple 3 sauf que l'on remplace ne catalyseur de formule (1) utilisé dans l'exemple 3 respectivement pour les catalyseurs de formule (3), (4), (5), (7), (8) et (9) préparés conformément aux procédés décrits dans les exemples 1 et 2 ci-dessus.

Les résultats obtenus sont rassemblés dans le tableau II ci-après.

## Tableau II

| Exemple | Catalyseur à l'étain | Sn métal en g pour 100g de A | temps de prise | Dureté Shore A | | | | | |
|---|---|---|---|---|---|---|---|---|---|
| | | | | initiale | | 5 jours à 120°C | 10 jours à 120°C | 20 jours à 120°C | 40 jours à 120°C |
| 6 | Formule (3) | 0,025 | 1 h 30 mn | Surface | 12 | 13 | 14 | 15 | |
| | | | | Fond | 14 | 13 | 14 | 15 | |
| 7 | Formule (4) | 0,025 | 55 mn | Surface | 16 | 16 | 15 | 16 | |
| | | | | Fond | 16 | 16 | 15 | 16 | |
| 8 | Formule (5) | 0,025 | 1 h 05 mn | Surface | 14 | 13 | 14 | 13 | |
| | | | | Fond | 14 | 14 | 15 | 13 | |
| 9 | Formule (7) | 0,025 | 1 h 30 mn | Surface | 13 | 13 | 14 | 13 | |
| | | | | Fond | 14 | 13 | 14 | 13 | |
| 10 | Formule (8) | 0,025 | 1 h 35 mn | Surface | 12 | 13 | 13 | 11 | |
| | | | | Fond | 14 | 14 | 14 | 13 | |
| 11 | Formule (9) | 0,025 | 1 h 20 mn | Surface | 13 | 12 | 13 | 13 | |
| | | | | Fond | 13 | 13 | 15 | 14 | |

**Exemple 12**

On procède de la même façon qu'à l'exemple 3 sauf qu'à 100 g de composition A on ajoute 1 g de silicate d'éthyle de formule Si $(OC_2\ H_5)_4$ et 0,05 g (poids de chélate) de bis (acétylécétonate) de dibutylétain.

Le produit obtenu présente un temps de prise de 15 min et une plaque de 2 mm d'épaisseur fabriquée par moulage est démoulable en 30 min.

Au bout de 5 jours on prélève sur des plaques des éprouvettes normalisées et on mesure les propriétés suivantes:

- dureté Shore A selon la norme ASTMD 2240,
- résistance à la rupture (R/R) selon la norme AFNOR T 46002 correspondant à la norme ASTMD 412,
- allongement à la rupture (A/R) en % selon la norme AFNOR T 46002.

On trouve pour l'élastomére les propriétés suivantes:

dureté Shore A: 15

résistance à la rupture (R/R): 1,35 MPa (mégapascals)

allongement à la rupture (A/R): 250 %

**Exemple 13**

Elaboration d'un élastomère vulcanisable à froid monocomposant.

On prépare un empâtage de la manière suivante:

On introduit dans un malaxeur:

100 parties d'une huile alpha, oméga-dihydroxydiméthylpolysiloxanique de viscosité 80 000 mPa.s à 25° C,

16 parties d'une huile méthylpolysiloxanique de viscosité 60 mPa.s à 25°C, ayant 0,9 % de groupes hydroxyles liés aux atomes de silicium, constituée de motifs $(CH_3)_3SiO_{0,5}$, $(CH_3)_2SiO$ et $CH_3SiO_{1,5}$ réparties de manière à conduire à un rapport $(CH_3)_3SiO_{0,5}/(C_3)_2SiO$ de 0,04 et à un rapport $CH_3SiO_{1,5}/(CH_3)$ SiO de 0,4,

14 parties d'une silice de combustion de surface spécifique 200 $m^2/g$ traitée par de l'octaméthylcyclotétrasiloxane.

L'ensemble est brassé à 150°C pendant 2 heures; au cours de cette opération un courant d'azote anhydre balaie l'atmosphère du malaxeur.

A partir de cet empâtage on réalise 2 compositions distinctes A) et B):

**Composition A**

A 100 parties de l'empâtage refroidi à 60°C environ, on ajoute 5 parties de méthyltriacétoxysilane et 0,015 parties sous (forme de chélate) de bis (acétylacètonate) de dibutylétain.

L'ensemble est agité pendant 1 heure, puis placé à l'abri de l'humidité de l'air dans des tubes étanches.

L'élastomène obtenu a les propriétés suivantes:

- temps non collant (durée d'obtention d'un toucher non collant): 10 min.

après 5 jours:

- résistance à la rupture: 2,7 MPa
- allongement à la rupture: 620 %
- dureté Shore A: 17

**Composition B**

A 100 parties de l'empâtage refroidi à 60°C environ, on ajoute 8 parties du réticulant de formule: $CH_3Si\ (ON = C\ (CH_3)\ C_2H_5)_3$ et 0,1 partie (sous forme de chélate) de bis (acétylacétonate) de dibutylétain.

L'ensemble est agité pendant 1 heure puis placé à l'abri de l'humidité de l'air dans des tubes étanches.

L'élastomère obtenu a les propriétés initiales suivantes:

- temps non collant: 40 min

après 5 jours:

- dureté Shore A: 18
- rêsistance à la rupture; 2,1 MPa
- allongement à la rupture: 682 %.

**Test de vieillissement accéléré**

De la composition B est placée dans des tubes étanches à l'humidité de l'air, un tube est conservé 72 heures à 100°C. Dans tous les cas la composition sort facilement du tube ou elle avait été introduite et elle réticule lorsqu'on la met en présence de l'humidité atmosphérique. A partir de cette composition on réalise des plaques pour faire des éprouvettes.

Après 5 jours les propriétés de l'élastomère obtenu à partir de la composition vieillie de façon accélérée sont les suivantes:

- dureté Shore A: 16
- résistance à la rupture: 1,6 MPa

allongement à la rupture: 630 %.

Ce test montre que la composition soumise à un vieillissement accéléré présentent des propriétés mécaniques pratiquement analogues.

**Exemple 14**

Elaboration d'un élastomère vulcanisable à froid monocomposant neutre.

On traite, conformément au procédé décrit dans FR-A-2 508 467, 100 parties d'une huile alpha, oméga-dihydroxy-polydiméthylsiloxane de viscosité 150 000 mPa.s à 25°C, par 8 parties d'un réticulant de formule $CH_3 Si(OCH_2 CH_2 OCH_3)_3$ en présence de 0,15 parties de diméthylhydroxylamine.

On ajoute ensuite 9 parties de silice de combustion de surface spécifique 300 m$^2$/g traitée par de l'octamétylcyclotetrasiloxane et 0,5 g (sous forme de chélate) de bis (acétylacétonate) de dibutylétain.

On conserve les compositions dans des tubes étanches.

L'élastomère obtenu à partir de ces compositions a les propriétés initiales suivantes:

- temps non collant: 60 min

après 5 jours:

- résistance à la rupture: 0,9 MPa
- allongement à la rupture: 385 %.

**Test de vieillissement**

La composition obtenue est mise dans des tubes étanches, l'un des tubes est porté à 100°C pendant 48 heures. Dans tous les cas, la composition sort facilement du tube ou elle avait été introduite et elle réticule lorsqu'on la met en présence de l'humidité atmosphérique.

A partir de cette compositons on réalise des plaques faire des éprouvettes.

Après 5 jours les propriétés de l'élastomère obtenue à partir de la composition vieillie de façon accélérés sont les suivantes:

- résistance à la rupture: 1,1 MPa
- allongement à la rupture: 370 %

Ce test démontre que la composition soumise à un vieillissement accéléré à 100°C ne présente pas d'altération notables de ses propriétés mécaniques.

**Exemple 15**

On refait exactement je mode opératoire de l'exemple 14, sauf que l'on utilise comme huile alpha, oméga-dihydroxy-polydiméthylsiloxane, une huile de viscosité de 20 000 mPa.s à 25°C et un réticulant de formule $Si(OCH_2 CH_2 OCH_3)_4$.

Le temps non collant (t) et les propriétés mécaniques initiales et celles obtenues au test de vieillissement accéléré sont rassemblés au tableau III ci-après (R/R = résistance à la rupture, A/R = allongement à la rupture).

**Exemple 16**

On refait exctement le mode opératoire de l'exemple 14 sauf que l'on utilise comme huile alpha, oméga-dihydroxy-polydiméthylsiloxane, une huile de viscosité de 20 000 mPa.s à 25°C, tout en utilisant le même réticulant qu'à l'exemple 14.

Les propriétés obtenues sont rassemblées au tableau III ci-après.

**Tableau III**

| Exemple | t (en mn) | Propriétés mécaniques Initiales R/R (MPa) | Initiales A/R (%) | 48 h à 100°C R/R (MPa) | 48 h à 100°C A/R (%) |
|---|---|---|---|---|---|
| 15 | 25 | 1,4 | 225 | 1,15 | 245 |
| 16 | 60 | 0,85 | 385 | 1,1 | 370 |

**Revendications**

1. Composition polyorganosiloxanique durcissable en élastomère, caractérisée en ce qu'elle comporte des polydiorganosiloxanes portant en bout de chaîne des groupes condensables ou hydrolysables, et éventuellement des composés de silicium dont chaque molécule porte au moins trois groupes condensables ou hydrolysables et une quantité catalytiquement efficace d'un chélate d'étain de valence IV, de 0,001 à 10 parties en poids pour 100 parties des polydiorganosiloxanes.

2. Composition selon la revendication 1, caractérisée en ce que le chélate d'étain de valence IV est hexacoordiné.

3. Composition selon la revendication 1 ou 2, caractérisée en ce que le chélate est un liquide à température et pression normales.

4. Composition selon la revendication 3, caractérisée en ce que le catalyseur à l'étain répond à la formule (I):

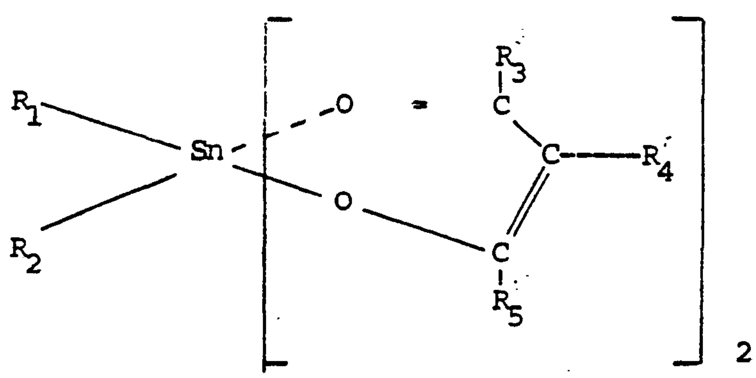

dans laquelle les radicaux $R^1$ et $R^2$ identiques ou différents représentent un radical alkyle en $C_1$-$C_{12}$, un radical alcoxy en $C_1$-$C_{12}$, un radical alcényle en $C_2$-$C_{12}$, un radical acyle en $C_1$-$C_{12}$, un radical acyloxy en $C_1$-$C_6$, un radical cycloalkyle éventuellement halogéné en $C_5$-$C_8$, un radical aryle mononucléaire éventuellement halogéné, arylalkyle mononucléaire dont la partie alkyle est en $C_1$-$C_4$, alkylaryle mononucléaire éventuellement halogéné dont la partie alkyle est en $C_1$-$C_4$, $R^1$ et $R^2$ étant différents de l'atome d'hydrogène;

$R^3$ et $R^5$ identiques ou différents sont choisis parmi l'atome d'hydrogène et un radical ne contenant pas plus de 8 atomes de carbone environ choisi parmi les radicaux alkyle, halogénoalkyle, cyanoalkyle, alcoxy, halogénoalcoxy, cyanoalcoxy, aryle mononucléaire éventuellement halogéné et arylalkyle mononucléaire

éventuellement halogéné dont la partie alkyle est en $C_1$-$C_4$;

$R^4$ est choisi parmi l'atome d'hydrogène, un radical ne contenant pas plus de 8 atomes de carbone environ choisi parmi un radical alkyle, halogénoalkyle, et aryle ou bien $R^4$ conjointement avec $R^5$, forme un radical hydrocarboné cyclique ne contenant pas plus de 12 atomes de carbone et éventuellement substitué par des radicaux chlore, nitro et cyano.

5. Composition selon la revendication 4, caractérisée en ce que les radicaux $R^1$ et $R^2$ représentent un radical alkyle en $C_1$-$C_{12}$.

6. Composition selon l'une quelconque des revendications précédentes, caractérisé en ce que le polydiorganosiloxane répond la formule générale (II):

$$Y_n\ Si\ R_{3-n}\ O(Si\ R_2O)_x\ Si\ R_{3-n}\ Y_n \quad (II)$$

dans laquelle:

R représente des radicaux hydrocarbonés monovalents identiques ou différents qui peuvent être polymères et/ou porteurs de substitutions, Y représente des groupes hydrolysables ou condensables identiques ou différents, ou des groupes hydroxy, n est choisi parmi 1, 2 et 3, et x est un nombre entier supérieur à 1.

7. Composition selon la revendication 6 selon laquelle le polydiorganosiloxane de formule (II) présente n = 1 et Y est un groupe hydroxy, caractérisé en ce qu'elle comporte en outre nécessairement un composé de silicium dont chaque molécule porte au moins trois groupes condensables ou hydrolysables de formule générale (III):

$$R_{4-a}\ Si\ Y'_a \quad (III)$$

dans laquelle R a les significations données plus haut pour la formule (II) et Y' représente des groupes hydrolysables ou condensables identiques ou différents.

a est égal à 3 ou 4.

8. Composition bi-composante selon la revendication 7, caractérisé en ce que le silane de formule (III) est un polyalcoxysilane dont tout ou partie peut être remplacé par un polyalcoxypolysiloxane et la quantité de chélate d'étain de valence IV hexacoordiné est de 0,001 à 10 parties en poids, de préférence de 0,05 à 3 parties en poids pour 100 parties de polydiorganosiloxate de formule (II).

9. Composition nono-composante selon la revendication 7, caractérisé en ce que le silane de formule (III) est choisi parmi un polyacyloxysilane, un polyalcoxysilane, un polycétiminoxysilane et un polyiminoxysilane et la quantité de chélate d'étain de valence IV hexacoordiné est de 0.001 à 0,05 partie en poids pour 100 parties de polysiloxane de formule (II).

**Claims**

1. Polyorganosiloxane composition curable to give an elastomer, characterized in that it contains polydiorganosiloxanes carrying condensable or hydrolyzable groups at the end of the chain, and, if appropriate, silicon compounds of which each molecule carries at least three condensable or hydrolyzable groups, and a catalytically effective quantity of a tin (IV) chelate, from 0.001 to 10 parts by weight per 100 parts of polydiorganosiloxanes.

2. Composition according to Claim 1, characterized in that the tin (IV) chelate is hexacoordinate.

3. Composition according to Claim 1 or 2, characterized in that the chelate is a liquid at normal temperature and pressure.

4. Composition according to Claim 3, characterized in that the tin catalyst corresponds to the formula (I):

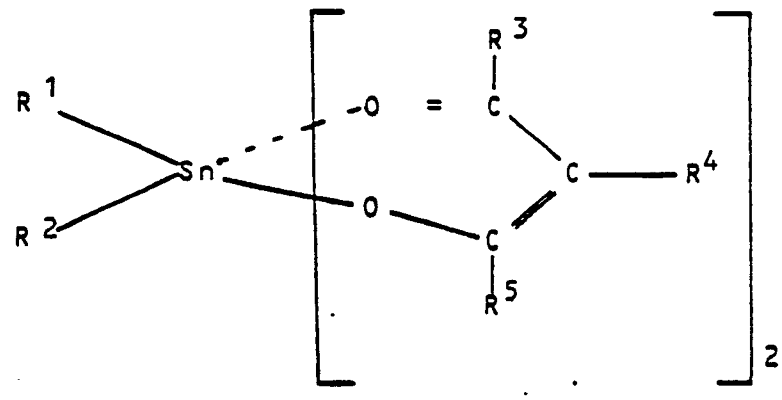

(I)

in which the radicals $R^1$ and $R^2$, which are identical or different represent a $C_1$-$C_{12}$ alkyl radical, a $C_1$-$C_{12}$ alkoxy radical a $C_2$-$C_{12}$ alkenyl radical, a $C_1$-$C_{12}$ acyl radical, a $C_1$-$C_6$ acyloxy radical, an optionally halogenated $C_5$-$C_8$ cycloalkyl radical, an optionally halogenated mononuclear aryl radical, a mononuclear arylalkyl radical of which the alkyl part is $C_1$-$C_4$, or an optionally halogenated mononuclear alkylaryl radical of which the alkyl part is $C_1$-$C_4$, $R^1$ and $R^2$ being other than the hydrogen atom; $R^3$ and $R^5$, which are identical or different, are chosen from the hydrogen atom and a radical containing not more than about 8 carbon atoms and chosen from alkyl radicals, halogenoalkyl radicals, cyanoalkyl radicals, alkoxy radicals, halogenoalkoxy radicals, cyanoalkoxy radicals, optionally halogenated mononuclear aryl radicals and optionally halogenated mononuclear arylalkyl radicals of which the alkyl part is $C_1$-$C_4$; and $R^4$ is chosen from the hydrogen atom and a radical containing not more than about 8 carbon atoms and chosen from an alkyl radical, a halogenoalkyl radical and an aryl radical, or alternatively $R^4$ and $R^5$ together form a cyclic hydrocarbon radical containing not more than 12 carbon atoms and optionally substituted by chlorine, nitro and cyano radicals.

5. Composition according to Claim 4, characterized in that the radicals $R^1$ and $R^2$ represent a $C_1$-$C_{12}$ alkyl radical.

6. Composition according to any one of the preceding claims, characterized in that the polydiorganosiloxane corresponds to the general formula (II):

$$-Y_n\ Si\ R_{3-n}\ O(Si\ R_2O)_x\ Si\ R_{3-n}\ -Y_n \quad (II)$$

in which:

R represents identical or different monovalent hydrocarbon radicals, which can be polymers and/or carriers of substituents, Y represents identical or different hydrolysable or condensable groups or hydroxyl groups, n is chosen from 1, 2 and 3 and x is an integer greater than 1.

7. Compositions according to Claim 6 in which n = 1 and Y is a hydroxyl group in the polydiorganosiloxane of formula (II), characterized in that it also necessarily contains a silicon compound of which each molecule carries al least three condensable or hydrolysable groups of general formula (III):

$$R_{4-a}\ Si\ Y'_a \quad (III)$$

in which R has the meanings given above for the formula (II), and Y' represents identical or different hydrolysable or condensable groups and a is equal to 3 or 4.

8. Two-component composition according to Claim 7, characterized in that the silane of formula (III) is a polyalkoxysilane of which all or part can be replaced with a polyalkoxypolysiloxane, and the quantity of hexacoordinate tin (IV) chelate is 0.001 to 10 parts by weight, preferably 0.5 to 3 parts by weight, per 100 parts of polydiorganosiloxane of formula (II).

9. One-component composition according to Claim 7, characterized in that the silane of formula (III) is chosen from a polyacyloxysilane, a polyalkoxysilane, a polyketiminoxysilane and a polyiminosilane, and the quantity of hexacoordinate tin (IV) chelate is 0.001 to 0.05 part by weight per 100 parts of polysiloxane of formula (II).

**Patentansprüche**

1. Zu Elastomeren härtbare Polyorganosiloxan-Zusammensetzung, dadurch gekennzeichnet, daß sie enthält: Polydiorganosiloxane, die am Kettenende kondensierbare oder hydrolysierbare Gruppen tragen, und gegebenenfalls Siliciumverbindungen, wovon jedes Molekül mindestens drei kondensierbare oder hydrolysierbare Gruppen trägt, und eine katalytisch wirksame Menge eines Zinnchelats der Wertigkeit IV von 0,001 bis 10 Gew.Teilen/100 Teile Polydiorganosiloxane.

2. Zusammensetzung gemäß Anspruch 1, dadurch gekennzeichnet, daß das Zinnchelat der Wertigkeit IV hexakoordiniert ist.

3. Zusammensetzung gemäß Anspruch 1 oder 2, dadurch gekennzeichnet, daß das Chelat eine Flüssigkeit bei normaler Temperatur und normalem Druck ist.

4. Zusammensetzung gemäß Anspruch 3, dadurch gekennzeichnet, daß der Katalysator mit Zinn der Formel (I)

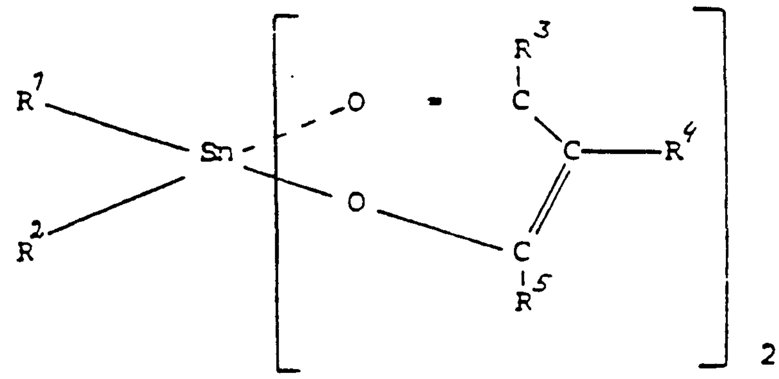

(I)

entspricht, worin die Reste $R^1$ und $R^2$, die identisch oder verschieden sind, einen $C_1$-$C_{12}$-Alkylrest, einen $C_1$-$C_{12}$-Alkoxyrest, einen $C_2$-$C_{12}$-Alkenylrest, einen $C_1$-$C_{12}$-Acylrest, einen $C_1$-$C_{12}$-Acyloxyrest, einen gegebenenfalls halogenierten $C_5$-$C_8$-Cycloalkylrest, einen gegebenenfalls halogenierten, einkeinigen Arylrest, einkernigen Arylalkylrest, dessen Alkylteil $C_1$-$C_4$ ist, einen gegebenenfalls halogenierten, einkernigen Alkylarylrest, dessen Alkylteil $C_1$-$C_4$ ist, bedeuten, wobei $R^1$ und $R^2$ verschieden von dem Wasserstoffatom sind;

$R^3$ und $R^5$, die identisch oder verschieden sind, sind ausgewählt unter dem Wasserstoffatom und einem Rest, der nicht mehr als etwa 8 Kohlenstoffatome enthält, ausgewählt unter den Resten Alkyl, Halogenalkyl, Cyanoalkyl, Alkoxy, Halogenalkoxy, Cyanoalkoxy, gegebenenfalls halogeniertem, einkernigem Aryl und gegebenenfalls halogeniertem, einkernigem Arylalkyl, dessen Alkylteil $C_1$-$C_4$ ist;

$R^4$ ist ausgewählt unter dem Wasserstoffatom, einem Rest, der nicht mehr als etwa 8 Kohlenstoffatome enthält, ausgewählt unter einem Rest Alkyl, Halogenalkyl und Aryl, oder $R^4$ bildet zusammen mit $R^5$ einen cyclischen Kohlenwasserstoffrest, der nicht mehr als 12 Kohlenstoffatome enthält und gegebenenfalls durch Chlor-, Nitro- und Cyanoreste substituiert ist.

5. Zusammensetzung gemäß Anspruch 4, dadurch gekennzeichnet, daß die Reste $R^1$ und $R^2$ einen $C_1$-$C_{12}$-Alkylrest darstellen.

6. Zusammensetzung gemäß einem der vorhergehenden Ansprühe, dadurch gekennzeichnet, daß das Polydiorganosiloxan der allgemeinen Formel (II)

$$-Y_n\, Si\, R_{3-n}\, O(Si\, R_2O)_x\, Si\, R_{3-n}\, -Y_n \quad (II)$$

entspricht, worin

R identische oder verschiedene einwertige Kohlenwasserstoffreste bedeutet, die Polymere und/oder Träger von Substitutionen sein können, Y identische oder verschiedene hydrolysierbare oder kondensierbare Gruppen oder Hydroxygruppen bedeutet, n ausgewählt ist unter 1, 2 und 3 und x eine ganze Zahl über 1 ist.

7. Zusammensetzung gemäß Anspruch 6, wobei das Polydiorganosiloxan der Formel (II) $n = 1$ aufweist und Y eine Hydroxygruppe ist, dadurch gekennzeichnet, daß es im übrigen notwendigerweise eine Siliciumverbindung enthält, von der jedes Molekül mindestens drei kondensierbare oder hydrolysierbare Gruppen der allgemeinen Formel (III)

$$R_{4-a}\, Si\, Y'_a \quad (III)$$

trägt, worin R die oben für Formel (II) angegebenen Bedeutungen hat und Y' identische oder verschiedene hydrolysierbare oder kondensierbare Gruppen bedeutet und a gleich 3 oder 4 ist.

8. Bi-Komponeneten-Zusammensetzung gemäß Anspruch 7, dadurch gekennzeichnet, daß das Silan der Formel (III) ein Polyalkoxysilan ist, das ganz oder teilweise durch ein Polyalkoxypolysiloxan ersetzt sein kann, und die Menge an hexakoordiniertem Zinnchelat der Wertigkeit IV 0,001 bis 10 Gew.Teile, vorzugsweise 0,05 bis 3 Gew.-Teile, pro 100 Teile Polydiorganosiloxan der Formel (II) ist.

9. Mono-Komponenten-Zusammensetzung gemäß Anspruch 7, dadurch gekennzeichnet, daß das Silan der Formel (III) ausgewählt ist unter einem Polyacyloxysilan, einem Polyalkoxysilan, einem Polyketiminoxysilan und einem Polyiminoxysilan und die Menge an hexakoordiniertem Zinnchelat der Wertigkeit IV 0,001 bis 0,03 Gew.Teile pro 100 Teile Polysiloxan der Formel (II) ist.